# EUROPEAN PATENT APPLICATION

(11) **EP 4 553 243 A1**
(43) Date of publication of application: **14.05.2025**
(21) Application number: 24209964.6
(22) Date of filing: 30.10.2024
(51) Int. Cl.: E03C 1/18, E03C 1/14, A47K 1/04, B29C 39/00, B29C 39/02, B29C 39/26

(54) **A MOLDED SOLID LAVATORY FROM RECYCLED MATERIALS**

(30) Priority: 09.11.2023 US 202363597478 P; 15.10.2024 US 202418916425
(71) Applicant: Kohler Co., Kohler, WI 53044 (US)
(72) Inventor: STAUFFER, Monty, Kohler, 53044 (US); SANCHEZ, Matthew, Kohler, 53044 (US)
(74) Representative: Barker Brettell LLP

(57) **Abstract**

A method of manufacturing a lavatory includes mixing recycled vitreous cull, particulate matter, and resin to form a composition; pouring the composition into a mold; and curing the composition in the mold to form the lavatory. Furthermore, another method of manufacturing a lavatory includes mixing vitreous cull, fiberglass resin composite cull, particulate matter, and resin; pouring the composition into a mold; and curing the composition in the mold to form the lavatory.

## Description

### CROSS-REFERENCE TO RELATED APPLICATIONS

This application claims priority benefit of Provisional Application No. 63/597,478 (Docket No. 010222-23055B-US) filed on November 9, 2023, which are hereby incorporated by reference in its entirety.

### FIELD

The present application relates to manufacturing a molded solid lavatory from recycled materials for use in a bathroom or kitchen setting.

### BACKGROUND

Lavatories, commonly known as sinks or washbasins, are essential fixtures in residential, commercial, and industrial spaces, serving as fundamental elements of hygiene and sanitation. Traditional lavatories are primarily constructed from materials such as ceramic, porcelain, or stainless steel, which offer durability and aesthetic appeal. However, the manufacturing processes for these conventional lavatories often involve high energy consumption, intricate designs, and limited flexibility in shape and size.

In recent years, there has been a growing demand for eco-friendly and sustainable solutions in various industries, including the production of lavatories. Manufacturers are constantly seeking innovative methods to reduce environmental impact, optimize production efficiency, and enhance product performance. Consequently, there is a need for a lavatory that combines environmental consciousness with a high-quality end product.

This disclosure aims to provide a sustainable solution that reduces waste, energy consumption, and production costs. The combination of recycled materials, efficient molding techniques, and curing processes allows for more environmentally responsible practices in manufacturing. Furthermore, this disclosure adaptability allows for the creation of lavatories in various shapes, sizes, and designs, catering to diverse consumer preferences and requirements.

### BRIEF DESCRIPTION OF THE DRAWINGS

Exemplary embodiments are described herein with reference to the following drawings, according to an exemplary embodiment.
Figure 1 illustrates a flowchart for manufacturing a lavatory according to an exemplary embodiment of the present disclosure.
Figure 2 illustrates another flowchart for manufacturing a lavatory according to an exemplary embodiment of the present disclosure.
Figure 3 illustrates the mixing of vitreous cull, fiberglass resin composite cull, particulate matter, and resin according to an exemplary embodiment of the present disclosure.
Figure 4 illustrates pouring the composition into a mold according to an exemplary embodiment of the present disclosure.
Figure 5 illustrates sealing the mold prior to pouring in the mix according to an exemplary embodiment of the present disclosure.
Figure 6 illustrates curing the composition in the mold to form the lavatory according to an exemplary embodiment of the present disclosure.
Figure 7 illustrates removing the lavatory from the mold with the ejection frame by turning the bolt of the ejection frame according to an exemplary embodiment of the present disclosure.

### SUMMARY

In an example embodiment, a method of manufacturing a lavatory is described. The method includes: mixing vitreous cull, particulate matter, and resin to form a composition; pouring the composition into a mold; and curing the composition in the mold to form the lavatory.

In another example embodiment, another method of manufacturing a lavatory is described. The method includes: mixing vitreous cull, fiberglass resin composite cull, particulate matter, and resin; pouring the composition into a mold; and curing the composition in the mold to form the lavatory.

In another example embodiment for manufacturing a lavatory includes: mixing vitreous cull, fiberglass resin composite cull, particulate matter, and resin; providing one or more coatings to the inside of a mole; pouring the composition into a mold; and curing the composition in the mold to form the lavatory.

In yet another embodiment, a method of manufacturing a lavatory is further described. The method includes assembling an ejection frame configured to: secure to the mold below the lavatory in an upside-down position along a plurality of feet of the lavatory; insert a bolt of the ejection frame through a center drain of the lavatory; contact a bowl of the lavatory; and lift the lavatory from the mold.

### DETAILED DESCRIPTION

The following embodiments include methods of manufacturing lavatories applicable in a bathroom setting or a kitchen setting. Various embodiments are described and illustrated separately. However, each of these embodiments is usable together in a single implementation, device, or system. It should be understood that the present disclosure is not limited to the details and methodology set forth in the detailed description or illustrated in the figures. It should be understood that the terminology used herein is for the purpose of description only and should not be regarded as limiting.

When a component, element, device, or the like of the present disclosure is described as having a purpose or performing an operation, function, or the like, the component, device, or element should be considered herein as being "configured to" meet that purpose or to perform that operation or function.

Natural and engineered stone surfaces have desirable aesthetics including natural veins and distinct geometric patterns. However, natural and engineered stone surfaces are expensive. Production of natural stone surfaces requires access to stone quarries and stone surfaces are limited to flat surfaces that must be sealed. Additionally, the production of natural and engineered stone surfaces requires the use of expensive specialized equipment. Accordingly, there exists a need for inexpensive solid surface products having desirable aesthetics.

Described herein are methods of manufacturing molded lavatories and assembling an ejection frame to remove the lavatory from the mold. More specifically, the present disclosure describes methods of manufacturing molded lavatories from recycled materials including vitreous cull, fiberglass resin composite cull, particulate matter, and resin. The vitreous material, or vitreous china, may be crushed, or otherwise broken or fragmented parts of a plumbing fixture such as a toilet, lavatory, bathtub, or basin. As part of the manufacturing process of the original plumbing fixture, the plumbing fixture was fired at a high temperature until it is hardened. The plumbing fixture may be recycled and become part of the vitreous cull based on a manufacturing defect or after the lifetime (product cycle) of the plumbing fixture. The composition created from these recycled materials may provide a lavatory with desirable aesthetics. The method may provide less expensive alternatives to natural and engineered stone surfaces. Other materials usable in any of the following examples include pottery cull, cast iron slag, waste glaze, enamel powder, foundry dust, and foundry sand. In another examples, portions of the vitreous cull may have not been fired. Examples include trimmed pieces or scraps from another manufacturing process.

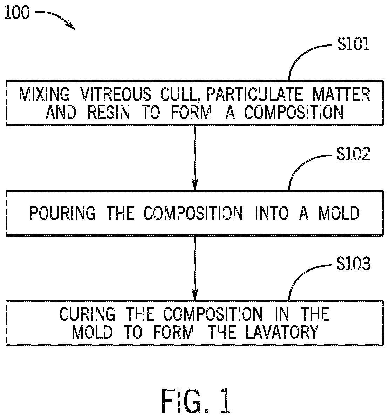

Figure 1 illustrates a flowchart for the method 100 of manufacturing a lavatory 500. Additional different or fewer acts may be provided.

At S101, vitreous cull, particulate matter, and resin may be mixed to form a composition. At act S 101, the resinous material may be in a liquid phase and comprise a mixture of two or more liquids. For example, one of the liquids may include the epoxy groups used and another liquid may be a hardener (e.g., an epoxy curing agent). The ferrous particles may be mixed into the resinous material while the resinous material is in a liquid phase. The ferrous particles may be mixed into the resinous material such that they are distributed throughout the resinous material. In some embodiments, a filler material and/or a colorant may further be mixed into the resinous material.

In some embodiments, the resin material may be acrylic, polystyrene, urethane, polyester, epoxy, hybrid composite, or eco-resin. The mixing process ensures the even distribution of these components, creating a uniform and blend.

In some embodiments, catalysts are added to control the rate of polymerization which facilitate the reaction without being consumed in the process.

Many resins undergo a process called cross-linking during polymerization. Cross-linking occurs when the polymer chains are chemically bonded at specific points, creating a network structure. Cross-linked resins tend to be stronger, more rigid, and have higher heat resistance compared to non-cross-linked ones.

Eco-resins may be used as a substitute for the resin in the composition. Eco-resins, also known as environmentally friendly resins or bio-based resins, are a category of resins designed to have reduced environmental impact compared to traditional petroleum-based resins. These resins are developed with a focus on sustainability, utilizing renewable resources and eco-friendly manufacturing processes.

Unlike conventional resins that are derived from fossil fuels, eco-resins are sourced from renewable materials. Common renewable sources include plant-based materials such as corn, soy, sugarcane, and other biomass. By using renewable resources, eco-resins reduce dependence on finite fossil fuels and contribute to a more sustainable future.

Many eco-resins are biodegradable or compostable, meaning they can break down naturally over time into harmless compounds. This property is a consideration in applications where the end product is not intended to be disposable but where reducing environmental impact is a priority.

Some eco-resins are designed to be recyclable, allowing the material to be reclaimed and reused in new products. Recycling helps reduce the demand for raw materials and minimizes waste. Also, eco-resins are generally formulated to have low toxicity, making them safer for both the environment and human health. Reduced emissions of harmful substances contribute to improved air and water quality.

A mold 400 may be pre-treated with one or more coatings or layers that are adhered at least to the inner surface of the mold 400. A first layer or coating may be applied (e.g., sprayed) directly against the inner surface of the mold 400. The first layer or coating may include at least a polyurethane component. The first layer or coating may encourage color fastness on the lavatory (e.g., reduce yellowing). The first layer or coating may perform an ultraviolet protection for the lavatory.

A second layer or coating may be applied (e.g., sprayed) to the first layer or coating and indirectly to the inner surface of the mold 400. The second layer or coating may be a clear gel-coat. The second layer or coating may protect the mold surface from the abrasive properties of the cull or other materials of the composition that are placed into the mold 400. The mold 400 may be a high temperature resistant aluminum gelcoat with a fiberglass backing.

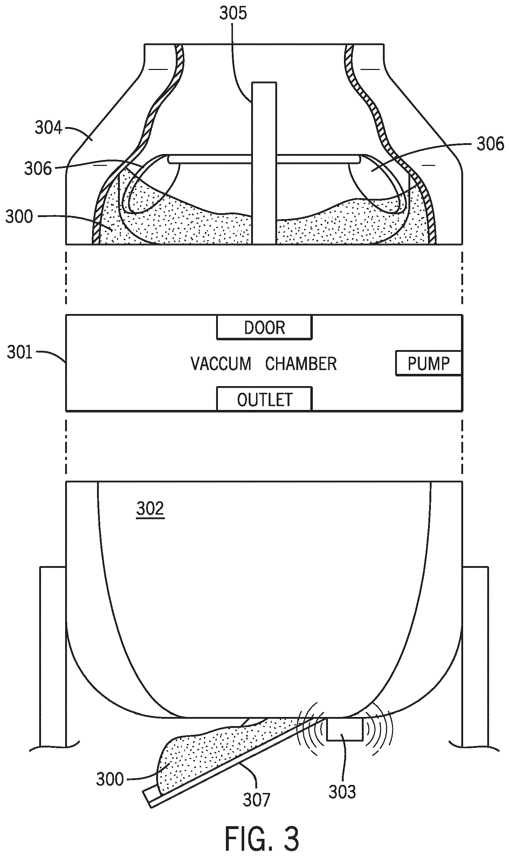

At S102, the composition 300 is poured or placed into the mold 400. The composition 300 may be placed into the mold by a mechanically driven device. One example is illustrated in Figure 3 and described below. Another example may include a pump connected to a hose to pneumatically drive the composition 300 into the mold 400.

The mold may comprise a mold upper half 401 and a mold lower half 402. At S102, the mold may be closed, such that the mold upper half 401 and the mold lower half 402 form a sealed, enclosed space having the desired shape of the lavatory 500.

The homogeneous mixture is then poured into a pre-designed mold 400. The mold 400 is a hollow cavity with the exact negative shape of the desired lavatory 500. The poured composition 300 fills the mold 400, taking its shape and contours.

At S103, the composition 300 is cured in the mold 400 to form the lavatory 500.

Curing begins after the composition is poured into the mold 400. The curing process can involve various techniques, including chemical reactions or exposure to specific environmental conditions such as heat, pressure, or ultraviolet (UV) light. The choice of curing technique depends on the composition 300 and the material used.

In some embodiments, curing involves chemical reactions between the components of the mixture. For example, in the presence of a catalyst, the resin undergoes polymerization-a chemical reaction where small molecules (monomers) combine to form large, interconnected molecules (polymers). This reaction results in the hardening of the composition 300.

During curing, the molecules within the resin cross-link or form bonds with adjacent molecules. This process creates a three-dimensional network of interconnected molecules, transforming the material from a liquid or semi-liquid state into a solid structure.

As the curing progresses, the material continues to solidify. The bonds between molecules strengthen, and the material becomes more rigid and stable. This solidification process ensures that the final product will have the necessary strength and durability.

In some embodiments, the process of curing is referred to as vitrifying, or vitrification, and may be utilized.

Vitrification is the process of transforming a material into a glass or glass-like substance. This process typically involves heating a material to a high temperature until it melts and then rapidly cooling it to form an amorphous, non-crystalline solid. Vitrification results in a smooth, glossy, and often transparent or translucent surface.

Curing is the process of hardening a material, often involving chemical reactions, while vitrification is the specific process of transforming a material into a glassy state through controlled heating and cooling. The two processes serve different purposes but can be interconnected in certain manufacturing applications.

After the curing process is complete, the lavatory 500 is allowed to cool and fully harden within the mold 400. Once the material has achieved its optimal strength and stability, the lavatory 500 may be removed from the mold 400.

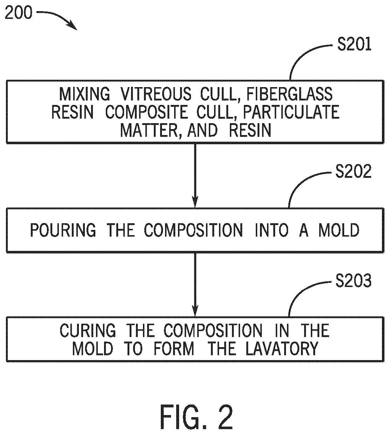

Figure 2 illustrates a flowchart for the method 200 of manufacturing a lavatory 500. The mold 400 may be the same as that discussed above with reference to method 100 and Figure 1. The resin and particulate matter may be the same as those discussed above with respect to method 100 and Figure 1. Additional different or fewer acts may be provided.

At S201, vitreous cull, fiberglass resin composite cull, particulate matter, and resin may be mixed to form a composition 300. At act S201, the resinous material may be in a liquid phase and comprise a mixture of two or more liquids. For example, one of the liquids may include the epoxy groups used and another liquid may be a hardener (e.g., an epoxy curing agent). In some embodiments, a filler material and/or a colorant may further be mixed into the resinous material.

At S202, the composition 300 is poured into a mold 400. The mold 400 may comprise a mold upper half 401 and a mold lower half 402. At S202, the mold 400 may be closed, such that the mold upper half 401 and the mold lower half 402 form a sealed, enclosed space having the desired shape of the lavatory 500. At S203, the composition 300 is cured in the mold 400 to form the lavatory 500.

Specifics regarding the composition and curing process may be the same as those discussed above with reference to method 100 and Figure 1.

Figure 3 illustrates an example apparatus for mixing a composition 300. The apparatus may include a vacuum chamber 301, a hopper 302, a vibration generator 303, and a mixing chamber 304. The mixing chamber 304 includes a shaft 305 that supports one or more blades 306. The blades 306 may be curved and angled to cut through the composition 300. As shown in Figure 3, the mixing chamber 304 is connected to the vacuum chamber 301 and the vacuum chamber 301 connects to the hopper 302. Thus, the composition 300 is provided from the mixing chamber 304, to the vacuum chamber 301, and then to the hopper 302. The hopper 302 may include a trapdoor 307 or another type of ramp or pathway to release the composition 300 from the hopper 302 and from the apparatus. Other arrangements are possible. In one example, the vacuum chamber 301 is upstream of the mixing chamber 304. Additional, different or fewer components may be included.

The mixing chamber 304 is configured to mix vitreous cull, fiberglass resin composite cull, particulate matter, and resin to form a composition 300. Prior to mixing, fragmenting the vitreous cull into pieces less than one inch in length, width, and height may be beneficial to allow the ingredients to be small enough to be mixed effectively. The size of the pieces of the ingredients after fragmenting may be the recommended size above or smaller or larger, depending on the specific use, molding technique, or desired final product.

In some embodiments, mechanical methods such as stirring, whisking, shaking, or blending may be used to mix the ingredients to form the composition 300. The choice of tool depends on the viscosity and nature of the ingredients. High-speed agitation methods, like using blenders or mixers, are effective for creating homogeneous mixtures, especially for materials with different densities.

Maintaining a consistent mixing technique, such as stirring in the same direction at a constant speed, helps distribute the ingredients evenly. Reversing the direction of stirring can sometimes aid in breaking up clumps and ensuring uniformity.

In some embodiments, homogenization may be used which is a mechanical process that reduces particle sizes in a composition 300 to achieve a uniform texture.

The mixing chamber 304 provides the composition 300 to the vacuum chamber 301. The vacuum chamber 301 may be sealed. A door may be closed between the mixing chamber 304 and the vacuum chamber 301 after the composition 300 or portion thereof flows into the vacuum chamber 301. The vacuum chamber 301 may include a pump to pull air from the sealed vacuum chamber 301. The vacuum may aid in releasing trapped bubbles of air from the composition 300.

The hopper 302 may be directly connected to the vacuum chamber 301. The vacuum chamber 301 may include an outlet that is open and closed by a valve so that the composition 300 can fall from the vacuum chamber 301 into the hopper 302. The hopper 302 provides a flow path to help release trapped bubbles of air from the composition 300. The vibration generator 303 may be constructed as a motor with a weight or unbalanced load. The vibration generator 303 may be constructed as a speaker having a low frequency. The vibrations may aid in releasing trapped bubbles of air from the composition 300.

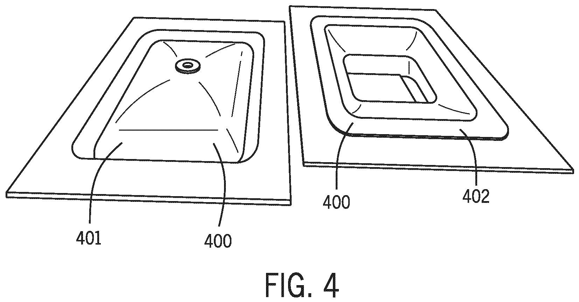

Figure 4 illustrates sealing the mold 400 prior to the pouring of the composition 300 into the mold 400 and the curing of the composition 300 in the mold 400 to form the lavatory 500. Figure 4 includes a mold upper half 401 and a mold lower half 402. The sealed, enclosed interior of the mold upper half 401 and the mold lower half 402 may form the desired shape of the molded lavatory.

Coating the mold 400 with a release agent may prevent the composition 300 from sticking to the mold 400. Steps may be taken to ensure the mold 400 is clean and dry. For example, the mold 400 may be dried and/or cleaned by contact or by air flow. Mold 400 preparation encourages simple demolding (e.g., removal of the lavatory from the mold 400) and a smooth surface finish.

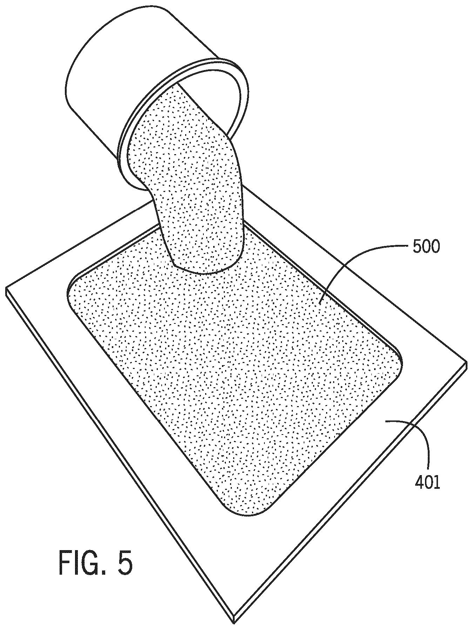

Figure 5 illustrates an alternative manual embodiment of pouring the composition 300 into the mold 400 which is in the desired shape of the lavatory. The manual embodiment is an alternative to the mixing and pouring apparatus illustrated in Figure 3. One or more pouring techniques may be used to ensure the composition 300 evenly fills the mold 400, creating a high-quality, defect-free final lavatory 500.

In some embodiments, the composition 300 may be poured into the mold 400 in a controlled manner while avoiding splashing or pouring too quickly to reduce the number of air bubbles introduced into the mixture. Air bubbles can weaken the final product and affect the appearance of the lavatory 500.

The viscosity of the composition 300 viscosity may also determine the appropriate pouring technique. For low-viscosity compositions, a steady, continuous pour may be suitable. For thicker mixtures, consider pouring in layers, allowing each layer to settle and degas before adding the next. This pouring technique may also help minimize the entrapment of air bubbles.

In some embodiments, other methods of removing trapped air bubbles may be used such as after pouring the composition, gently tapping the mold, or use a vibrating tool to help the material settle and eliminate air pockets. Vibration encourages the composition 300 to flow into the entire mold 400, ensuring uniformity.

In some embodiments, the composition 300 and mold 400 may be ensured to be level by using a leveling tool to maintain an even surface, especially if the mold 400 must be filled to a specific height.

In some embodiments, the composition 300 may be placed into the mold 400 using a hose or pipe. The hose or pope may be pneumatically or hydraulically driven to propel the composition 300.

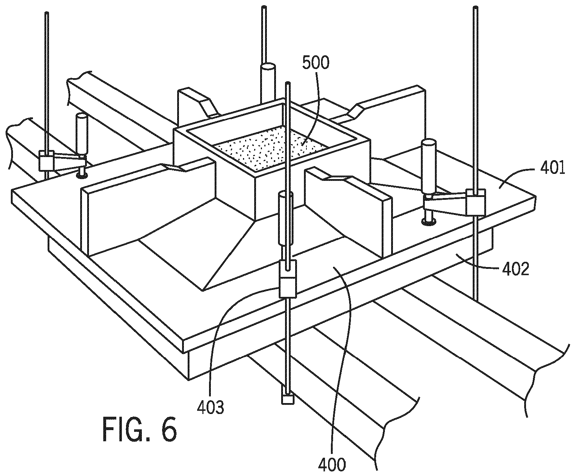

Figure 6 illustrates the composition 300 curing in the mold 400 with mold upper half 401 on top of the mold lower half 402. One or more clamps 403 may be used to couple and press together the mold upper half 401 and the mold lower half 402.

Specifics regarding the curing process may be the same as those discussed above with reference to method 100 and Figure 1. The lavatory may also be glazed by spraying or otherwise applying a glassy coating to a surface of the lavatory.

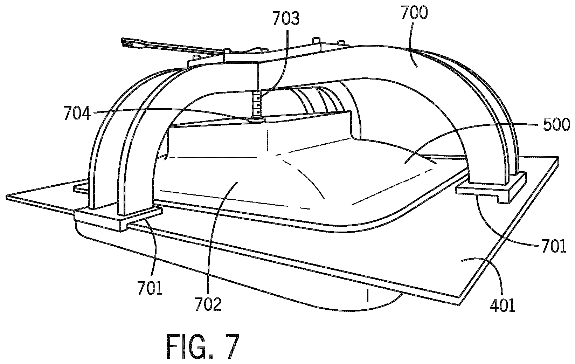

Figure 7 illustrates a method for assembling an ejection frame 700 configured to: secure to the mold upper half 401 below the lavatory 500 in an upside-down position along a plurality of feet 701 of the lavatory 500; insert a bolt 703 of the ejection frame 700 through a center drain 704 of the lavatory 500; contact a bowl 702 of the lavatory 500; and lift the lavatory 500 from the mold upper half 401.

The bolt 703 may be inserted through a center drain 704 of the lavatory 500 that has an endpiece that may make contact with the bowl 702 of the lavatory 500. The bolt 703 may be raised by cranking a turning mechanism at the end of the bolt opposite the endpiece.

The plurality of feet 701 of the lavatory 500 may be secured to the mold upper half 401 and/or another surface if necessary. The plurality of feet 701 of the lavatory 500 creates opposing force to the bolt 703 that allow the lavatory 500 to be removed from the mold upper half 401.

In some embodiments, the lavatory 500 is leveraged from the mold upper half 401 by rotating a bolt 703 through a center drain 704 to slowly and precisely apply upward force to the lavatory 500 and eventually remove the lavatory 500 from the mold upper half 401.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A method of manufacturing a lavatory, the method comprising:
mixing recycled vitreous cull, particulate matter, and resin to form a composition;
removing air bubbles from the composition;
pouring the composition into a mold; and
curing the composition in the mold to form the lavatory.

2. The method of claim 1, wherein the composition comprises:
recycled vitreous cull from at least 65 wt %;
particulate matter from at least 3 wt %; and
resin from at least 20 wt %.

3. The method of claim 1 or claim 2, wherein the recycled vitreous cull includes portions of a plumbing fixture.

4. The method of claim 1 or claim 2 or claim 3, further comprising:
assembling an ejection frame.

5. The method of claim 1, or any other preceding claim, wherein assembling an ejection frame comprises:
securing to the mold below the lavatory in an upside-down position along a plurality of feet of the lavatory;
inserting a bolt of the ejection frame through a center drain of the lavatory;
contacting a bowl of the lavatory; and
lifting the lavatory from the mold,
and optionally wherein the method further comprises:
removing the lavatory from the mold with the ejection frame by turning the bolt of the ejection frame.

6. The method of claim 1, or any other preceding claim, further comprising:
fragmenting the vitreous cull into pieces less than one inch in length, width, and height, prior to mixing.

7. The method of claim 1, or any other preceding claim, further comprising:
sealing the mold prior to pouring in the composition.

8. The method of claim 1, or any other preceding claim, wherein the resin is an acrylic, polystyrene, urethane, polyester, epoxy, hybrid composite, or eco-resin.

9. The method of claim 1, or any other preceding claim, wherein the recycled vitreous cull is unfired, and optionally wherein the recycled vitreous cull includes trimmings from a manufacturing process.

10. A method of manufacturing a lavatory, the method comprising:
mixing recycled vitreous cull, fiberglass resin composite cull, particulate matter, and resin to form a composition;
pouring the composition into a mold; and
curing the composition in the mold to form the lavatory.

11. The method of claim 10, wherein the composition comprises:
vitreous cull from at least 45 wt %;
particulate matter from at least 20 wt %; and
resin from at least 15 wt %.

12. The method of claim 10 or claim 11, wherein the resin includes an acrylic, polystyrene, urethane, polyester, epoxy, hybrid composite, or eco-resin.

13. The method of claim 10 or claim 11 or claim 12, wherein the recycled vitreous cull includes portions of a plumbing fixture.

14. The method of any of claims 10 to 13, further comprising:
securing to the mold below the lavatory in an upside-down position along a plurality of feet of the lavatory;
inserting a bolt of an ejection frame through a center drain of the lavatory;
contacting a bowl of the lavatory; and
lifting the lavatory from the mold,
and optionally wherein the method further comprises:
removing the lavatory from the mold with the ejection frame by turning the bolt of the ejection frame.

15. The method of any of claims 10 to 14, wherein any one or more of:
a) the method comprises fragmenting the vitreous cull and fiberglass resin composite cull into pieces less than one inch in length, width, and height, prior to mixing;
b) the method comprises sealing the mold prior to pouring in the composition; and
c) the recycled vitreous cull includes trimmings from a manufacturing process.
